# EUROPEAN PATENT SPECIFICATION

(11) **EP 2 232 086 B1**
(45) Date of publication and mention of the grant of the patent: **10.04.2013**
(21) Application number: 09700682.9
(22) Date of filing: 08.01.2009
(51) Int. Cl.: F16B 5/02

(54) **COUPLING ASSEMBLY**
KOPPLUNGSANORDNUNG
ENSEMBLE D'ACCOUPLEMENT

(30) Priority: 11.01.2008 US 20600 P
(43) Date of publication of application: 29.09.2010
(73) Proprietor: Herman Miller Inc., Zeeland, MI 49464 (US)
(72) Inventor: MACLEAN, Tim, J., Bathwick Bath BA2 6QW (GB)
(74) Representative: McLeish, Nicholas Alistair Maxwell
(86) International application number: PCT/US2009/030389
(87) International publication number: WO 2009/089317

(56) References cited:
- WO-A-2008/079778
- FR-A- 2 554 522
- US-A- 3 339 609
- US-A- 4 929 136

## Description

### FIELD OF THE INVENTTON

The present invention relates to a self-adjusting mount for coupling furniture components and a method of installing a component on a self-adjusting mount.

### BACKGROUND

Typically, furniture components and other work space systems are shipped unassembled and then assembled at the work site, or are unassembled at one location, moved, and assembled at another location. Furthermore, additional furniture components are sometimes added or removed to modify existing work space systems.

Although the furniture components and other work space systems are manufactured to be compatible with one another, difficulty in installation may arise when the manufacturing tolerances vary between the connection locations of the different components. For example, a component may have two or more spaced apart connection locations mating with corresponding connection locations on another component. Difficulty in installation may arise if the spacing between locations on one component do not exactly match the spacing between the locations on the other component. An example of a self-adjusting mount can be found in US 4929136A.

### BRIEF SUMMARY

In accordance with the present invention, there is provided a self-adjusting mount according to claim 1, and a method of installing a component on a shelf-adjusting mount, the method being in accordance with claim 15.

The foregoing paragraphs have been provided by way of introduction, and are not intended to limit the scope of the following claims. The various preferred embodiments, together with further advantages, will be best understood by reference to the following detailed description taken in conjunction with the accompanying drawings.

### BRIEF DESCRIPTION OF THE DRAWINGS

Figure 1 is a perspective view of one embodiment of the support system.

Figure 2 is a perspective view of another embodiment of the support system.

Figure 3 is an exploded view of one embodiment of the self-adjusting mount.

Figure 4 is an exploded view of another embodiment of the self-adjusting mount.

Figure 5 is an exploded view of yet another embodiment of the self-adjusting mount.

Figure 6 is a fragmentary view of the self-adjusting mount of FIG. 1.

Figure 7 is an exploded view of one embodiment of the carrier assembly.

Figure 8 is a profile view of one embodiment of the carrier assembly.

Figure 9 is a perspective view of the carrier of FIG. 8.

### DETAILED DESCRIPTION OF THE PRESENTLY PREFERRED EMBODIMENTS

The invention is described with reference to the drawings in which like elements are referred to by like numerals. The relationship and functioning of the various elements of this invention are better understood by the following detailed description. However, the embodiments of this invention as described below are by way of example only, and the invention is not limited to the embodiments illustrated in the drawings.

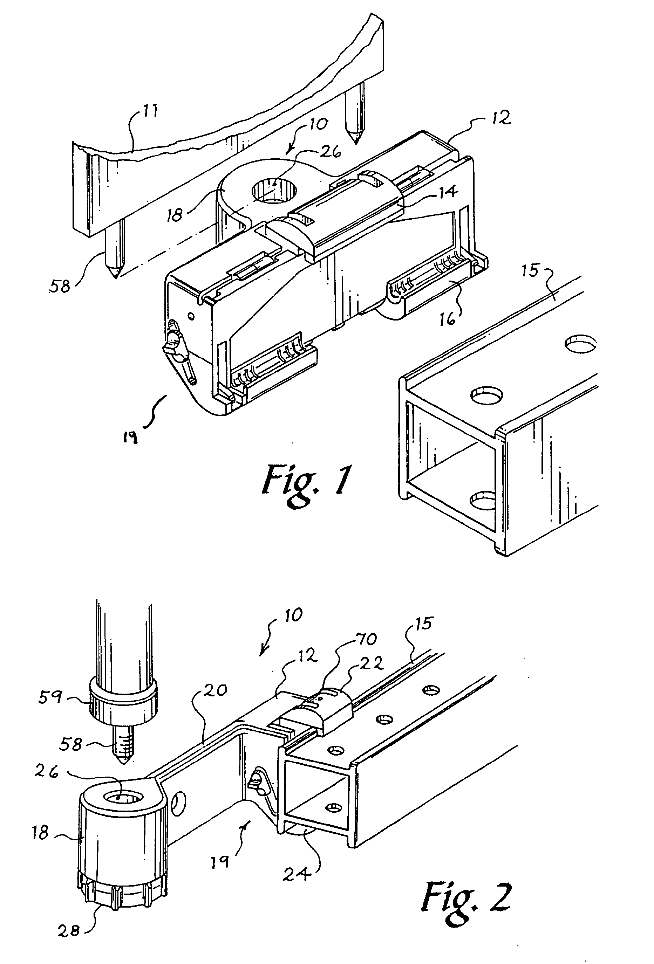

The present invention provides a support system 10, one embodiment of which is shown in FIG. 1. The support system 10 is configured to connect one or more work space system components together, such as mounting a screen 11, storage, electronic devices, toolbars, etc. to a work surface, such as a table structure 15 or frame work. Typically, the components, such as the screen 11, have two or more spaced apart connection locations, configured in one embodiment as a pair of downwardly extending posts 58, which are configured to be connected to corresponding connection locations on the other component, for example the table structure 15. It should be understood that a "component" is any device capable of being connected or coupled to another device, and is not limited to the examples stated herein. The support system 10 includes a housing 12 with a carrier assembly 19 having an upper clamping member 14 and a lower clamping member 16. The clamping members 14, 16 are designed to couple with another component to secure the support system 10. For example, as shown in FIG. 1, the clamping members 14, 16 of the carrier assembly 19 are configured to clamp onto the table structure I5. As shown in FIG. 2, in an alternative embodiment, the carrier 19 of the support system 10 can be coupled with an extension arm 20.

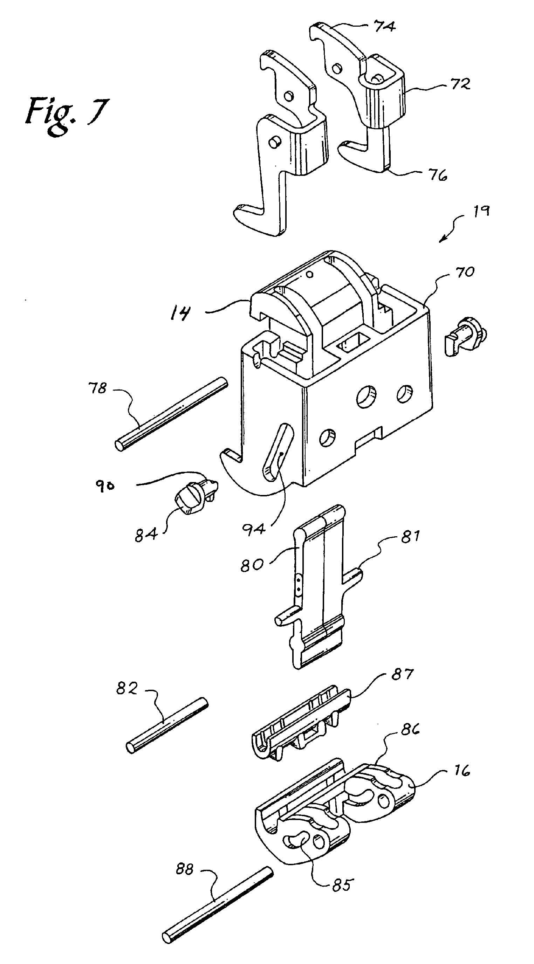

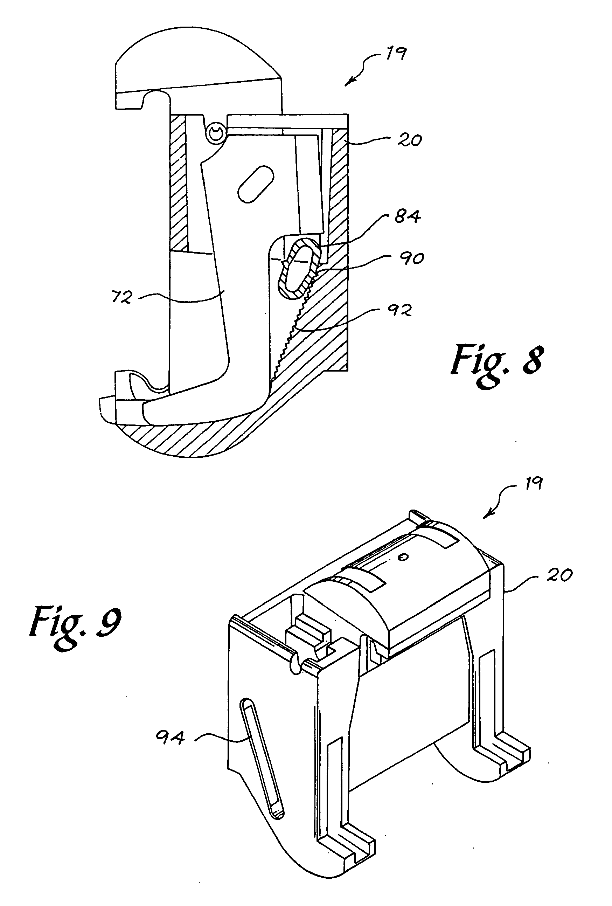

As further illustrated in FIGS. 7, 8 and 9, the carrier assembly 19 includes a carrier housing 70 with a pair of inserts 72 rotatably disposed therein. The inserts are preferably made of metal, although other materials such as plastic may be suitable. The carrier housing 70 and clamping members 14, 16 may be made out of any suitable plastic, such as a polymer, or out of metal, composites or combinations thereof. The inserts 72 have a first portion 74 forming part of the upper clamping member 14 and a second portion 76, which forms part of the lower clamping member 16. A first pin 78 rotatably secures the metal inserts 72 within the carrier housing 70. A lever 80, as shown in this embodiment, is disposed between the metal inserts 72 inside the carrier housing 70 and has two detent portions 81. The lever 80 is rotatably coupled with the first pin 78.

A lower jaw 86 is coupled with the housing 70 through a second pin 88. The lower jaw 86 further comprises a rubber gasket 87 used to clamp the table structure 15. A rod 82 is disposed though the lever 80 and is slidingly disposed within a slot 85 formed within the lower jaw 86 of the lower clamping member 16. Rotation of the lever 80 about the first pin 78, and subsequent movement of pin 82 within the slot 85 of the lower jaw 86 causes the lower jaw 86 to rotate about the second pin 88, compressing the gasket 87 onto the table structure 15

The housing 70 is configured to receive a pair of tabs 84. A pair of slots 94 are formed within the housing 70 and are configured to receive the pair of tabs 84. The tabs 84 have protrusions 90 that are configured to retain the tab 84 within the housing 70 and which engage with a serrated surface 92 of the carrier housing 70. The tabs 84 are disposed between the serrated surface 92 and the lower portion 76 of the inserts 72.

A self-adjusting mount 18 is supported by the housing 12. The housing 12 has an oversized aperture 26 defined therethrough that allows for access to the self-adjusting mount 18. The diameter of the aperture 26 of the housing 12 is configured to receive a portion of another component, such as a post 58 of the screen mount 11, which may or may not be aligned with the self-adjusting mount 18, due to a number of factors. To accommodate for the misalignment between the self-adjusting mount 18 and the connecting member 58 of the screen mount 11, the diameter of the aperture 26 is larger than the diameter or width of the connecting member 58 which is to be coupled with the self-adjusting mount 18.

Figure 2 illustrates an alterative embodiment of the support system 10. In this embodiment, an extension arm 20 forms part of the housing 12, which includes an upper and lower clamping members 22, 24 adapted to clamp onto the table structure 15, or other component. The self-adjusting mount 18 is removably disposed within the extension arm 20 of the housing 10.

It can be appreciated that the self-adjusting mount 18 can be coupled to any other type of component or a housing whether it be disposed within a work surface, a panel wall, or, as shown in FIGS. 1 and 2, the extension arm 20. Moreover, it is contemplated that more than one self-adjusting mount 18 may be included within a single housing assembly 12.

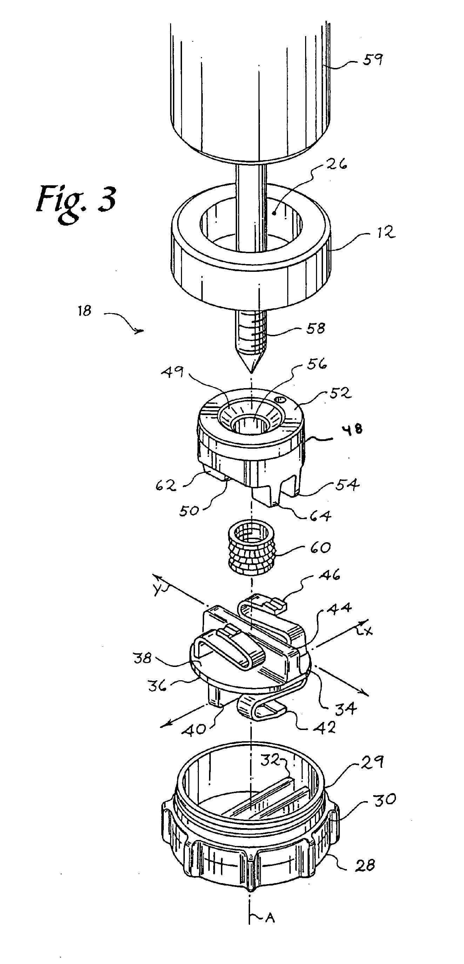

The self-adjusting mount 18, as better illustrated in FIG. 3, includes a base 28, defining a longitudinal axis A coincident with the center of the aperture 26. The base 28 is axially engaged with, but freely rotatable within, the housing 12. In one embodiment, the base 28 may have a ridge or a ring forming part thereof, which is configured to frictionally engage with the housing 12, but still allows for relative rotational movement of the base 28 with respect to the housing 12. Any other type of connecting allowing for rotational movement between the base 28 and the housing 12 may be employed as well, such as an O-ring.

A series of tabs 30, or grippable protrusions, are disposed about the outer circumference of the bottom portion of the base 28. The tabs 30 assist a user to grip the base 28. Other grippable devices and surfaces are also suitable, including various knurled surfaces, high-friction coatings, or materials, etc.

Turning back to the exploded view of the self-adjusting mount 18 shown in FIG. 3, a first channel 32 is formed within at least a portion of the base 28, and extends in a first direction "X." In various embodiments, the first channel 32 is integrally formed as part of the base 28, or alternatively is configured as an independent structure that is non-rotatably disposed and/or attached to the base 28. In the embodiment shown in FIG. 3, the first channel 32 extends across the entire length of the base 28. It should be understood that the channel 32 may extend across only a portion of the base 28, and/or may be configured as a plurality of aligned discrete channels. It is not necessary that the first channel 32 cross through the center of the base 28. The location and cross-sectional shape of the first channel 32 can be modified depending on the application.

A coupling 34 having a first side 36 and an opposite second side 38 is disposed adjacent to and/or in the base 28. A first guide 40 is formed on the first side 36 of the coupling 34 and extends in the first direction X. The first guide 40, similar to the first channel 32 of the base 28, may also be partially disposed across the first side 36 of the coupling 34. The first guide 40 is shaped to moveably engage the first channel 32 of the base 28, for example through sliding. The shape of the first guide 40 and corresponding channel 32 may vary and may include, for example, a rectangular or a rounded shape so long as the movement of the first guide 40 in the corresponding channel 32 is not impeded.

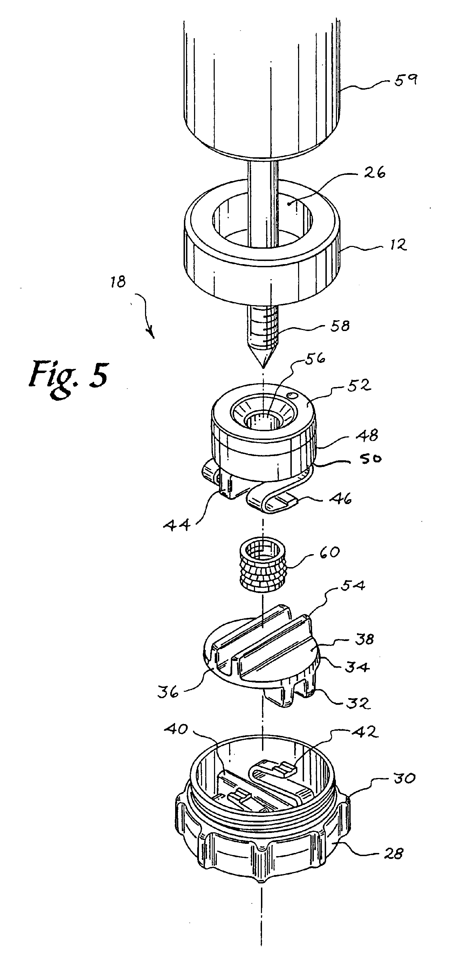

A first set of biasing members 42 is disposed on one or both sides of the first guide 40 on the first side 36 of the coupling 34. It should be understood that the term "set" means one or more, while the term "plurality" means two or more. As such, one or more biasing members defines a set of biasing members. The biasing members 42 may be integrally formed as part of the coupling 34, or may be independent components that are attached to the first side 36 of the coupling 34. The biasing members 42 are configured to create a biasing force between the first side 36 of the coupling 34 and the base 28. The number and arrangement of the first set of biasing members 42 may vary, depending on the application. In addition, the first set of biasing members 42 may be coupled to the base 28 instead of the first side 36 of the coupling 34, as shown in FIG. 5, may be freely disposed between the coupling 34 and the base 28, or may be incorporated into the channel 32 and /or the guide 40. The biasing members 42 can be formed as the illustrated cantilever springs, or as compression springs, tension springs, torsion springs, or any other type of spring or biasing device.

A second guide 44 is similarly disposed on the second side 38 of the coupling 34, and extends in a second direction, "Y." The second guide 44 may have features similar to those of the first guide 40. However, it is not necessary that the features of the second guide 44 be identical to those of the first guide 40 in any particular application, so long as the intended purpose of the guides 40, 44 is not altered. In one embodiment, as shown in FIG. 3 the guides 40, 44 have different widths, with the respective channels 32, 54 having complimentary dimensions. Thus, the coupling 34 may only be disposed between the base 28 and the locating portion 48 in one orientation. The first 40 and second 44 guides are disposed in different directions with respect to one another, and in the embodiment shown in FIG. 3, extend substantially perpendicular to one another in a plane substantially perpendicular to the longitudinal axis A.

A second set of biasing members 46 is disposed between the second side 38 of the coupling 34 and the locating portion 48. Alternatively, the second set of biasing members 46 can be disposed on the coupling 34, on the locating portion 48 as illustrated in FIG. 5, or be freely disposed therebetween. The first and second sets of biasing members 42, 46, as stated with respect to the first and second guides 40, 44, need not be identical or similar to one another for a particular application, so long as the function of both is not diminished. The number or location of the biasing members 42, 46 may vary depending on the application.

A locating portion 48 is disposed adjacent to, and is moveably engaged with, the second side 38 of the coupling 34, for example through sliding. The locating portion 48 has a first side 50 and a second side 52 opposite to the first side 50, with an aperture 56 formed therethrough, which can be aligned along the longitudinal axis A. A second channel 54 forms part of the first side 50 of the locating portion 48. The second channel 54 is disposed in the second direction Y. As shown in FIG. 3, the first channel 32 and the second channel 54 are substantially perpendicular to one another in a plane substantially perpendicular to the longitudinal axis A.

The aperture 56 of the locating portion 48 is configured to receive a connecting member 58, such as a stud, of another furniture component. The aperture 56 and the connecting member 58 may be coupled through different types of engagement mechanisms, such as a threaded engagement, a frictional engagement, a bayonet arrangement, or a snap-fit engagement, by means of rotating the locating portion 48.

As shown in FIG. 3, the upper portion of the aperture 56 has a tapered shoulder 49, with a frusto-conical shape. The decreasing diameter or taper helps guide the connecting member 58 through the aperture 26 and into engagement with the locating portion 48. The connecting member 58 may also have a tapered shape to facilitate alignment with the locating portion 48. A body portion 59 of the connecting member 58 has a diameter equal or greater than the diameter of the aperture 26 of the housing 12. As the connecting member 58 engages the shoulder, it applies a lateral load to the locating portion 48 and moves the locating portion 48 such that the axis of the aperture 56 is aligned with the connecting member 58, which may or may not be aligned with the axis A. The connecting member 58 may take a variety of shapes, such as a rod having a cylindrical shape, or formed with a frusto-conical shape or end portion.

The housing 12 is disposed adjacent to the second side 52 of the locating portion 48. The aperture 26 of the housing 12 is configured to align with the aperture 56 of the locating portion 48, and configured to abut the body portion 59 on the connecting member 58. As discussed previously, the housing 12 may have an opening larger than the aperture 56 of the locating portion 48 so that the second side 52 of the locating portion 48 is at least partially exposed when coupled with the housing 12. The conical shape on the end of the connecting member 58 ensures initial contact with the similar geometry of the locating portion 48, which moves the locating portion 48 to align itself with the connecting member 58.

Instead of the connecting member 58 being coupled directly to the locating portion 48, the connecting member 58 may be coupled with an insert 60 that is disposed within the aperture 56 of the locating portion 48, as shown in FIG. 3. The locating portion 48 can be modular in nature, and is designed to accommodate inserts 60 having openings of varying diameters so as to accommodate different size or configurations of mating connecting members. In this way, one insert 60 can be replaced with another to accommodate different connectors without having to reconfigure the housing 12 or other components. The insert 60 may be configured to engage with the locating portion 48 , for example, with threads or a protrusion disposed about the outer surface of the insert 60.

To accommodate the insert 60, the second channel 54 may be configured as a first portion 62 and a second portion 64 to allow for the insert 60 to be installed or replaced, as shown in FIG. 3. Alternatively, the insert 60 may be sufficiently shallow as to not impede the function, and not require modification, of the first side 50 of the locating portion 48.

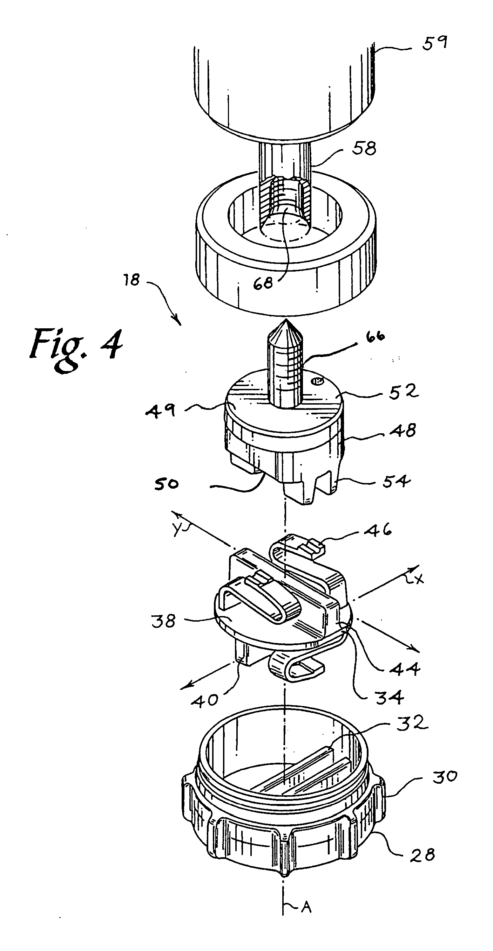

In an alternative arrangement, as shown in FIG. 4, the locating portion 48 may have a post or a shaft 66 extending therefrom, which is configured to engage with a receptacle or a socket 68 formed on the connecting member 58. In one embodiment, for example, the shaft 66 would have external threads configured to threadingly engage with the internal threads of the receptacle 68 of the connecting member 58.

It can be appreciated that the location and orientation of the guides 40, 44 and the channels 32, 54, which connect the base 28, coupling 34, and locating portion 48 together may vary. For example, it is not necessary that the first channel 32 be coupled either to the base 28 or to the coupling 34. Instead, the first channel 32 may be non-rotatably disposed between the two components. The second channel 54, first guide 40, and second guide 44 may similarly be non-rotatably disposed between their respective components. Other attachment configurations may also exist. For example, in an alterative embodiment, shown in FIG. 5, the location of the guides 40, 44 and the channels 32, 54 are interchanged. The first guide 40 is now disposed on the base 28 and the first channel 32 is disposed on the first side 36 of the coupling 34. Similarly, the second guide 44 may now be disposed on the first side 50 of the locating portion 48 and the second channel 54 may now be disposed on the second side 38 of the coupling 34.

It is also important to note that the location and attachment configuration of the first channel 32 and the first guide 40 need not be identical to that of the second channel 54 and the second guide 44 for a particular configuration, and may be deliberately different for assembly benefits. Regardless of the attachment configuration of the guides 40, 44 and channels 32, 54, it can be appreciated that the respective channel and guide are not rotatable with respect to one another, due the interlocking relationship between the base 28, coupling 34, and locating portion 48. In this way, the interaction between the channel 32 and the guide 40 allows relative movement between the coupling 34 and the base 28 along the X axis, while the interaction between the channel 54 and the guide 44 allows relative movement between the coupling 34 and the locating portion 48 along the Y axis.

To secure the housing 12 of the support system 10 to the work surface such as the table structure 15, the carrier assembly 19 is coupled with the table structure 15. The clamping members 22, 24 are configured to clamp the table structure 15. The rubber gasket 87 of the lower clamping member 24 allows for increased tolerances between the clamping members 22, 24 and the table structure 15. The inserts 72 can be adjusted to reduce the degree of tolerance once the carrier housing 70 is coupled to the table structure 15. The inserts 72 are pivotally adjusted within the carrier housing 70 by sliding the tabs 84 along an elongated aperture 94 formed within the carrier housing 70. The protrusions 90 of the tabs 84 engage with the serrated surface 92 of the carrier housing to lock the metal inserts 72 within the carrier housing 70. The tabs 84 can be manipulated independent of one another, thus allowing the inserts 72 to be independently positionable as well. This feature allows for the carrier housing 70 to be biased or preloaded in different configurations. The second portion 76 of the metal insert 72 can be adjusted with respect to the table structure 15, and provides additional strength and stability to the carrier assembly 70. The adjustability of the metal inserts 72 also can take up any clearance between the clamping members 22, 24 and the table structure 15 and allow for the adjustment and leveling of the housing 12 with respect to the table structure 15.

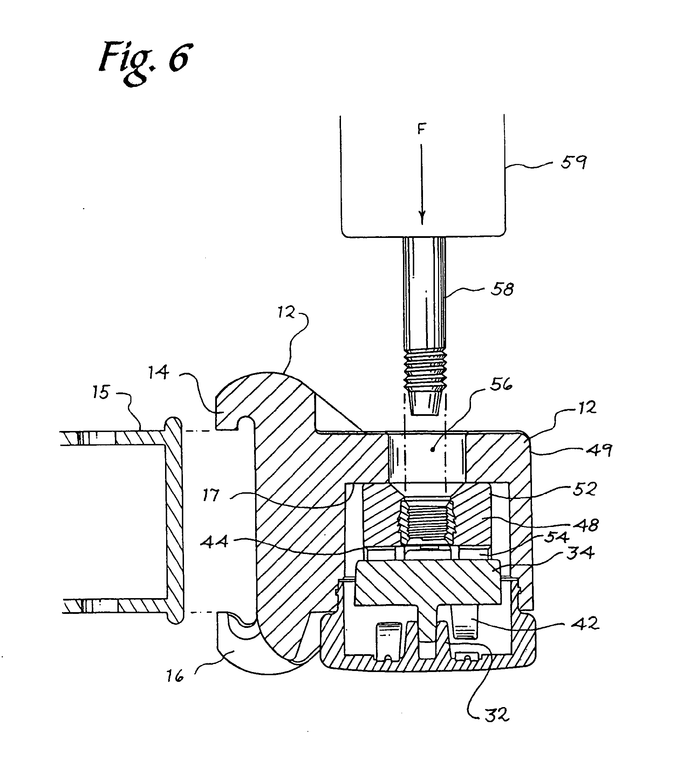

To couple the connecting member 58 to the support system 10, the self-adjusting mount 18 is first in a floating position, as shown in FIG. 6. In the floating position, the biasing members 42, 46 bias the locating portion 48 away from the coupling 34 and the coupling 34 away from the base 28. In the floating position, the coupling 34 can simultaneously move relative to the base 28 in the first direction X and the locating portion 48 can move relative to the coupling in the second direction Y.

The connecting member 58 is inserted into the aperture 26 of the housing 12 and applies a force to compress the biasing members 42, 46. If the connecting member 58 is aligned with the longitudinal axis A of the self-adjusting mount 18, the locating portion 48 will remain more or less stationary during the insertion process. Once the connecting member 58 is aligned with the aperture 56 of the locating portion 48, the base 28 is rotated in a first direction, e.g. clockwise.

If the connecting member 58 is not aligned with the longitudinal axis A of the self-adjusting mount 18, the insertion of the connecting member 58 will exert a lateral force against the tapered shoulder 49 of the locating portion 48, causing the locating portion 48 to move, or float, in at least in one of the X or Y directions until the aperture 56 of the locating portion 48 is aligned with the connecting member 58. In other words, the interaction between the connecting member 58 and the aperture 56 of the locating portion 48 results in the self-alignment of the locating portion 48, such that the aperture 56 is aligned with the locating portion 58. In this scenario, the aperture 56 will be aligned with the connecting member 58, but may not be aligned with the longitudinal axis A of the self-adjusting mount 18, which is defined by the axis of the aperture 26 of the housing 10 and the base 28.

In either scenario, once the aperture 56 and the connecting member 58 are aligned, the base 28 is rotated in the first direction. The rotation of the base 28 in the first direction causes the simultaneous rotation of the coupling 34 and locating portion 48 in the first direction. The rotation of the base 28 is translated to the coupling 34 because the first channel 32 and the first guide 40 are rotationally locked by way of their respective geometrical shapes. Similarly, the rotation of the coupling 34 is translated to the locating portion 48 through the rotational interlocking between the second guide 44 and the second channel 54. The rotation of the locating portion 48 causes the locating portion 48 to engage, e.g. threadably, with the connecting member 58. The process is substantially the same if the insert 60 is disposed within the aperture 56 of the locating portion 48.

The rotation of the locating portion 48 causes it to threadingly engage with, and travel along, the connecting member 58. The longitudinal displacement of the locating portion 48 reduces the amount of vertical distance along the longitudinal axis A between the locating portion 48, the housing 12, and the connecting member 58. The displacement of the locating portion 48 in the longitudinal direction causes the locating portion 48 to clamp the housing 12 between the body 59 of the connecting member 58. In this position, the locating portion 48 is frictionally engaged with an underside 17 of the housing 12, as shown in FIG. 6, thereby fixing the locating portion 48 and connecting member 58 in the X and Y directions.

To release the connecting member 58 from the support system 10, the base 28 is simply rotated in a second direction, opposite from that of the first direction. The rotation of the base 28 is translated to the coupling 34 and the locating portion 48, which causes the locating portion 48 and the connecting member 58 to unclamp the housing 12 and disengage. The connecting member 58 may be then removed from the support system 10. As the base 28 is rotated in the second direction, the distance between the underside of the housing 17 and the locating portion 48 increases along the longitudinal axis A. As the distance increases, the biasing members 42, 46 bias compress until the locating portion 48 is disengaged from the connecting member 58.

Although the present invention has been described with reference to preferred embodiments, those skilled in the art will recognize that changes may be made and formed in detail without departing from the scope of the invention. It is therefore intended that the foregoing detailed description be regarded as illustrative rather than limiting, and that it be understood that it is the following claims, that define the scope of this invention.

## Claims

1. A self-adjusting mount (18) for coupling furniture components having either an aperture formed therein or a shaft extending therefrom, comprising
a base (28) having an aperture (26), said base (28) defining a longitudinal axis (A) coincident with the centre of the aperture (26);
a coupling (34) having a first side (36) and an opposite second side (38), wherein the first side (36) of the coupling (34) is moveably engaged with the base (28) and wherein the coupling (34) is moveable relative to the base (28) substantially only in a first direction (X) perpendicular to the longitudinal axis (A); and
a locating portion (48) having either an aperture (56) having a tapered shoulder with frusto-conical shape formed therein or a shaft (66) having a tapered shoulder with frusto-conical shape extending therefrom, wherein the locating portion (48) is moveably engaged with the second side (38) of the coupling (34) and wherein the locating portion (48) is moveable relative to the coupling (34) substantially only in a second direction (Y), wherein the second direction (Y) is non-parallel to the first direction (X), **characterised in that** the second direction (Y) is perpendicular to the longitudinal axis (A).

2. The self-adjusting mount (18) of claim 1, further comprising at least one biasing member (42) disposed between the coupling (34) and the base (28).

3. The self-adjusting mount (18) of claim 2, wherein the at least one biasing member (42) is coupled to one of the coupling (34) or the base (28).

4. The self-adjusting mount (18) of claim 1, further comprising at least one biasing member (46) disposed between the coupling (34) and the locating portion (48).

5. The self-adjusting mount (18) of claim 4, wherein the at least one biasing member (46) is coupled to one of the coupling (34) or the locating portion (48).

6. The self-adjusting mount (18) of claim 1, wherein the first direction (X) is substantially perpendicular to the second direction (Y), and the locating portion (48) is simultaneously moveable relative to the base (28) in the first direction (X) and in the second direction (Y).

7. The self-adjusting mount (18) of claim 6, further comprising a stop device (32) disposed between the base (28) and the coupling (34) so as to prevent movement of the coupling (34) in the second direction (Y).

8. The self-adjusting mount (18) of claim 1, wherein one of the base (28) and the first side (36) of the coupling (34) has a channel (32) and the other of the base (28) and the first side (36) of the coupling (34) has a guide (40) wherein the channel (32) and the guide (40) are orientated in the first direction (X) so as to permit relative movement between the coupling (34) and the base (28).

9. The self-adjusting mount (18) of claim 8, wherein the base (28) is configured with the channel (32) extending in the first direction (X) and wherein the first side (36) of the coupling (34) is configured with the guide (40) moveable in the channel (32) of the base (28).

10. The self-adjusting mount (18) of claim 1, wherein the one of the locating portion (48) and the second side (38) of the coupling (34) has a channel (54)and the other of the locating portion (48) and the second side (38) of the coupling (34) has a guide (44).

11. The self-adjusting mount (18) of claim 10, wherein the locating portion (48) is configured with the channel (54) extending in the second direction (Y), and wherein the second side (38) of the coupling (34) is configured with the guide (44) moveable in the channel (54) of the locating portion (48).

12. The self-adjusting mount (18) of claim 1, wherein the base (28), the coupling (34), and the locating portion (48) are non-rotatably connected relative to each other about the longitudinal axis (A).

13. The self-adjusting mount (18) of claim 12, further comprising a housing (12) rotatably supporting the base (28), wherein the base (28), the coupling (34), and the locating portion (48) are rotatable relative to the housing (12) about the longitudinal axis (A) in at least a first rotational direction, and wherein the locating portion (48) is configured to threadingly engage with a connecting member (58) of a furniture component, as the base (28), coupling (34), and the locating portion (48) are rotated in the first rotational direction.

14. The self-adjusting mount (18) of claim 13, wherein the base (28), the coupling (34), and the locating portion (48) are rotatable relative to the housing (12) about the longitudinal axis (A) in a second rotational direction, opposite the first rotational direction, and wherein the locating portion (48)is further configured to threadingly disengage with the connecting member (58) as the base (28), the coupling (34), and the locating portion (48) are rotated in the second rotational direction.

15. A method of installing a component on a self-adjusting mount (18) according to any of claims 1 - 14, the method comprising:
providing the component having a connecting member (58), wherein the connecting member (58) comprises either a shaft extending therefrom or an aperture (68) formed therein;
moving the locating portion (48) of the self-adjusting mount (18) in one or both of the first direction (X) and the second direction (Y) and thereby aligning either the aperture (56) formed in the locating portion (48) or the shaft (66) extending from the locating portion (48) with respectively the shaft or the aperture (68) of the connecting member (58); and
engaging the connecting member (58) with the locating portion (48).

16. The method of claim 15, where said moving the locating portion (48) further comprises inserting the shaft of the connecting member (58) into the aperture (56) of the locating portion (48), or inserting the shaft of the locating portion (48) into the aperture (68) of the connecting member (58).

17. The method of claim 15, the method further comprising rotating the locating portion (48) in a first rotational direction to engage the connecting member (58) with the locating portion (48).

18. The method of claim 17, wherein rotating the locating portion (48) comprises threading the shaft of the connecting member (58) into the aperture (66) of the locating portion (48), or threading the shaft (56) of the locating portion (48) into the aperture (68) of the connecting member (58).

## Patentansprüche

1. Selbstjustierende Halterung (18) zur Kupplung von Möbelkomponenten mit entweder einer darin ausgebildeten Öffnung oder einem sich davon erstreckenden Schaft, welche folgendes aufweist:
eine Grundplatte (28) mit einer Öffnung (26), wobei die besagte Grundplatte (28) eine Längsachse (A) in Übereinstimmung mit dem Zentrum der Öffnung (26) definiert;
eine Kupplung (34) mit einer ersten Seite (36) und einer gegenüberliegenden zweiten Seite (38), wobei die erste Seite (36) der Kupplung (34) beweglich mit der Grundplatte (28) in Eingriff ist und wobei die Kupplung (34) beweglich relativ zu der Grundplatte (28) im Wesentlichen lediglich in eine erste Richtung (X) senkrecht zu der Längsachse (A) ist; und
einen Festlegungsabschnitt (48) mit entweder einer darin ausgebildeten Öffnung (56), die eine konische Schulter mit einer kegelstumpfförmigen Form aufweist, oder einem sich davon erstreckenden Schaft (66), der eine konische Schulter mit einer kegelstumpfförmigen Form aufweist, wobei der Festlegungsabschnitt (48) beweglich mit der zweiten Seite (38) der Kupplung (34) in Eingriff ist und wobei der Festlegungsabschnitt (48) beweglich relativ zu der Kupplung (34) im Wesentlichen lediglich in eine zweite Richtung (Y) ist, wobei die zweite Richtung (Y) nicht parallel zu der ersten Richtung (X) ist, **dadurch gekennzeichnet, dass** die zweite Richtung (Y) senkrecht zu der Längsachse (A) ist.

2. Selbstjustierende Halterung (18) nach Anspruch 1, die des Weiteren mindestens ein Spannelement (42) aufweist, das zwischen der Kupplung (34) und der Grundplatte (28) angeordnet ist.

3. Selbstjustierende Halterung (18) nach Anspruch 2, wobei das mindestens eine Spannelement (42) mit der Kupplung (34) oder der Grundplatte (28) verbunden ist.

4. Selbstjustierende Halterung (18) nach Anspruch 1, die des Weiteren mindestens ein Spannelement (46) aufweist, das zwischen der Kupplung (34) und dem Festlegungsabschnitt (48) angeordnet ist.

5. Selbstjustierende Halterung (18) nach Anspruch 4, wobei das mindestens eine Spannelement (46) mit der Kupplung (34) oder dem Festlegungsabschnitt (48) verbunden ist.

6. Selbstjustierende Halterung (18) nach Anspruch 1, wobei die erste Richtung (X) im Wesentlichen senkrecht zu der zweiten Richtung (Y) ist, und der Festlegungsabschnitt (48) gleichzeitig beweglich relativ zu der Grundplatte (28) in der ersten Richtung (X) und in der zweiten Richtung (Y) ist.

7. Selbstjustierende Halterung (18) nach Anspruch 6, die des Weiteren eine Arretiervorrichtung (32), die zwichen der Grundplatte (28) und der Kupplung (34) angeordnet ist, aufweist, um somit eine Bewegung der Kupplung (34) in die zweite Richtung (Y) zu verhindern.

8. Selbstjustierende Halterung (18) nach Anspruch 1, wobei entweder die Grundplatte (28) oder die erste Seite (36) der Kupplung (34) einen Kanal (32) aufweist und das jeweils andere Element, also entweder die Grundplatte (28) oder die erste Seite (36) der Kupplung (34), eine Führung (40) aufweist, wobei der Kanal (32) und die Führung (40) in die erste Richtung (X) orientiert sind, so dass eine relative Bewegung zwischen der Kupplung (34) und der Grundplatte (28) zugelassen wird.

9. Selbstjustierende Halterung (18) nach Anspruch 8, wobei die Grundplatte (28) so ausgestaltet ist, dass sich der Kanal (32) in die erste Richtung (X) erstreckt, und wobei die erste Seite (36) der Kupplung (34) so ausgestaltet ist, dass die Führung (40) in dem Kanal (32) der Grundplatte (28) beweglich ist.

10. Selbstjustierende Halterung (18) nach Anspruch 1, wobei entweder der Festlegungsabschnitt (48) oder die zweite Seite (38) der Kupplung (34) einen Kanal (54) aufweist und das jeweils andere Element, also entweder der Festlegungsabschnitt (48) oder die zweite Seite (38) der Kupplung (34), eine Führung (44) aufweist.

11. Selbstjustierende Halterung (18) nach Anspruch 10, wobei der Festlegungsabschnitt (48) so ausgestaltet ist, dass sich der Kanal (54) in die zweite Richtung (Y) erstreckt, und wobei die zweite Seite (38) der Kupplung (34) so ausgestaltet ist, dass die Führung (44) in dem Kanal (54) des Festlegungsabschnitts (48) beweglich ist.

12. Selbstjustierende Halterung (18) nach Anspruch 1, wobei die Grundplatte (28), die Kupplung (34) und der Festlegungsabschnitt (48) nicht-drehbar relativ zueinander um die Längsachse (A) herum verbunden sind.

13. Selbstjustierende Halterung (18) nach Anspruch 12, die des Weiteren ein Gehäuse (12), das drehbar die Grundplatte (28) trägt, aufweist, wobei die Grundplatte (28), die Kupplung (34) und der Festlegungsabschnitt (48) drehbar relativ zu dem Gehäuse (12) um die Längsachse (A) in mindestens eine erste Rotationsrichtung sind, und wobei der Festlegungsabschnitt (48) so ausgestaltet ist, dass er gewindeartig mit einem Anschlusselement (58) einer Möbelkomponente in Eingriff ist, wenn die Grundplatte (28), Kupplung (34) und der Festlegungsabschnitt (48) in die erste Rotationsrichtung gedreht werden.

14. Selbstjustierende Halterung (18) nach Anspruch 13, wobei die Grundplatte (28), die Kupplung (34) und der Festlegungsabschnitt (48) relativ zu dem Gehäuse (12) um die Längsachse (A) drehbar in eine zweite Rotationsrichtung sind, entgegengesetzt der ersten Rotationsrichtung, und wobei der Festlegungsabschnitt (48) des Weiteren dazu ausgestaltet ist, gewindeartig mit dem Anschlusselement (58) auszukuppeln, wenn die Grundplatte (28), die Kupplung (34) und der Festlegungsabschnitt (48) in die zweite Rotationsrichtung gedreht werden.

15. Verfahren zur Montage einer Komponente auf einer selbstjustierenden Halterung (18) gemäß einem der Ansprüche 1 bis 14, wobei das Verfahren folgendes aufweist:
Bereitstellen der Komponente mit einem Anschlusselement (58), wobei das Anschlusselement (58) entweder einen sich davon erstreckenden Schaft oder eine darin ausgebildete Öffnung (68) aufweist;
Bewegen des Festlegungsabschnitts (48) der selbstjustierenden Halterung (18) in eine oder beide der ersten Richtung (X) und der zweiten Richtung (Y), und dabei Ausrichten entweder der Öffnung (56), die in dem Festlegungsabschnitt (48) gebildet ist, oder des Schafts (66), der sich von dem Festlegungsabschnitt (48) erstreckt, mit dem jeweiligen Schaft oder der jeweiligen Öffnung (68) des Anschlusselements (58); und
In-Eingriff-Bringen des Anschlusselements (58) mit dem Festlegungsabschnitt (48).

16. Verfahren nach Anspruch 15, wobei das besagte Bewegen des Festlegungsabschnitts (48) des Weiteren ein Einführen des Schafts des Anschlusselements (58) in die Öffnung (56) des Festlegungsabschnitts (48) aufweist, oder ein Einführen des Schafts des Festlegungsabschnitts (48) in die Öffnung (68) des Anschlusselements (58).

17. Verfahren nach Anspruch 15, wobei das Verfahren des Weiteren ein Drehen des Festlegungsabschnitts (48) in eine erste Rotationsrichtung zum Eingreifen des Anschlusselements (58) mit dem Festlegungsabschnitt (48) aufweist.

18. Verfahren nach Anspruch 17, wobei ein Drehen des Festlegungsabschnitts (48) ein gewindeartiges Drehen des Schafts des Anschlusselements (58) in die Öffnung (66) des Festlegungsabschnitts (48) aufweist, oder ein gewindeartiges Drehen des Schafts (56) des Festlegungsabschnitts (48) in die Öffnung (68) des Anschlusselements (58).

## Revendications

1. Support à auto-ajustement (18) pour coupler des composants de meuble ayant soit une ouverture qui y est formée soit un arbre qui s'en étend, comprenant
une base (28) ayant une ouverture (26), ladite base (28) définissant un axe longitudinal (A) qui coïncide avec le centre de l'ouverture (26) ;
un accouplement (34) ayant un premier côté (36) et un deuxième côté opposé (38), où le premier côté (36) de l'accouplement (34) est en prise mobile avec la base (28) et où l'accouplement (34) peut se déplacer par rapport à la base (28) essentiellement uniquement dans une première direction (X) perpendiculaire à l'axe longitudinal (A) ; et
une partie d'emplacement (48) ayant soit une ouverture (56) qui présente un épaulement conique avec une configuration tronconique qui y est formée soit un arbre (66) qui présente un épaulement conique avec une configuration tronconique qui s'en étend, où la partie d'emplacement (48) est en prise mobile avec le deuxième côté (38) de l'accouplement (34) et où la partie d'emplacement (48) peut se déplacer par rapport à l'accouplement (34) essentiellement uniquement dans une deuxième direction (Y), où la deuxième direction (Y) n'est pas parallèle à la première direction (X), **caractérisée en ce que** la deuxième direction (Y) est perpendiculaire à l'axe longitudinal (A).

2. Support à auto-ajustement (18) de la revendication 1, comprenant en outre au moins un élément de sollicitation (42) disposé entre l'accouplement (34) et la base (28).

3. Support à auto-ajustement (18) de la revendication 2, dans lequel l'au moins un élément de sollicitation (42) est couplé à l'un(e) de l'accouplement (34) ou de la base (28).

4. Support à auto-ajustement (18) de la revendication 1, comprenant en outre au moins un élément de sollicitation (46) disposé entre l'accouplement (34) et la partie d'emplacement (48).

5. Support à auto-ajustement (18) de la revendication 4, dans lequel l'au moins un élément de sollicitation (46) est couplé à l'un(e) de l'accouplement (34) ou de la partie d'emplacement (48).

6. Support à auto-ajustement (18) de la revendication 1, dans lequel la première direction (X) est essentiellement perpendiculaire à la deuxième direction (Y), et la partie d'emplacement (48) peut simultanément se déplacer par rapport à la base (28) dans la première direction (X) et dans la deuxième direction (Y).

7. Support à auto-ajustement (18) de la revendication 6, comprenant en outre un dispositif d'arrêt (32) disposé entre la base (28) et l'accouplement (34) de manière à empêcher le mouvement de l'accouplement (34) dans la deuxième direction (Y).

8. Support à auto-ajustement (18) de la revendication 1, dans lequel l'un(e) de la base (28) et du premier côté (36) de l'accouplement (34) possède un canal (32) et l'autre de la base (28) et du premier côté (36) de l'accouplement (34) possède un guide (40) où le canal (32) et le guide (40) sont orientés dans la première direction (X) de façon à permettre un mouvement relatif entre l'accouplement (34) et la base (28).

9. Support à auto-ajustement (18) de la revendication 8, dans lequel la base (28) est configurée de façon à ce que le canal (32) s'étende dans la première direction (X) et dans lequel le premier côté (36) du couplage (34) est configuré de façon à ce que le guide (40) puisse se déplacer dans le canal (32) de la base (28).

10. Support à auto-ajustement (18) de la revendication 1, dans lequel l'un(e) de la partie d'emplacement (48) et du deuxième côté (38) de l'accouplement (34) possède un canal (54) et l'autre de la partie d'emplacement (48) et du deuxième côté (38) de l'accouplement (34) possède un guide (44).

11. Support à auto-ajustement (18) de la revendication 10, dans lequel la partie d'emplacement (48) est configurée de façon à ce que le canal (54) s'étende dans la deuxième direction (Y), et dans lequel le deuxième côté (38) de l'accouplement (34) est configuré de façon à ce que le guide (44) puisse se déplacer dans le canal (54) de la partie d'emplacement (48).

12. Support à auto-ajustement (18) de la revendication 1, dans lequel la base (28), l'accouplement (34), et la partie d'emplacement (48) sont reliés de manière non-rotative les uns par rapport aux autres autour de l'axe longitudinal (A).

13. Support à auto-ajustement (18) de la revendication 12, comprenant en outre un boîtier (12) supportant en rotation la base (28), dans lequel la base (28), l'accouplement (34), et la partie d'emplacement (48) peuvent tourner par rapport au boîtier (12) autour de l'axe longitudinal (A) dans au moins une première direction de rotation, et dans lequel la partie d'emplacement (48) est configurée pour s'engager par filetage avec un élément de liaison (58) d'un composant de meuble, à mesure que la base (28), l'accouplement (34), et la partie d'emplacement (48) sont mis en rotation dans la première direction de rotation.

14. Support à auto-ajustement (18) de la revendication 13, dans lequel la base (28), l'accouplement (34), et la partie d'emplacement (48) peuvent tourner par rapport au boîtier (12) autour de l'axe longitudinal (A) dans une deuxième direction de rotation, opposée à la première direction de rotation, et dans lequel la partie d'emplacement (48) est en outre configurée pour se désengager par filetage avec l'élément de liaison (58) à mesure que la base (28), l'accouplement (34), et la partie d'emplacement (48) sont mis en rotation dans la deuxième direction de rotation.

15. Procédé d'installation d'un composant sur un support à auto-ajustement (18) selon l'une des revendications 1 à 14, le procédé comprenant le fait de :
fournir le composant ayant un élément de liaison (58), où l'élément de liaison (58) comprend soit un arbre qui s'en étend soit une ouverture (68) qui y est formée ;
déplacer la partie d'emplacement (48) du support à auto-ajustement (18) dans l'une de la première direction (X) et de la deuxième direction (Y) ou les deux et de ce fait aligner soit l'ouverture (56) formée dans la partie d'emplacement (48) soit l'arbre (66) s'étendant de la partie d'emplacement (48) avec respectivement l'arbre ou l'ouverture (68) de l'élément de liaison (58) ; et
engager l'élément de liaison (58) avec la partie d'emplacement (48).

16. Procédé de la revendication 15, dans lequel ledit déplacement de la partie d'emplacement (48) comprend en outre l'insertion de l'arbre de l'élément de liaison (58) dans l'ouverture (56) de la partie d'emplacement (48), ou l'insertion de l'arbre de la partie d'emplacement (48) dans l'ouverture (68) de l'élément de liaison (58).

17. Procédé de la revendication 15, le procédé comprenant en outre la rotation de la partie d'emplacement (48) dans une première direction de rotation pour engager l'élément de liaison (58) avec la partie d'emplacement (48).

18. Procédé de la revendication 17, dans lequel la rotation de la partie d'emplacement (48) comprend le filetage de l'arbre de l'élément de liaison (58) dans l'ouverture (66) de la partie d'emplacement (48), ou le filetage de l'arbre (56) de la partie d'emplacement (48) dans l'ouverture (68) de l'élément de liaison (58).
